(19) Europäisches Patentamt
European Patent Office
Office européen des brevets

(11) **EP 2 199 879 A1**

(12) **EUROPÄISCHE PATENTANMELDUNG**

(43) Veröffentlichungstag:
    23.06.2010 Patentblatt 2010/25

(51) Int Cl.:
    *G05B 13/04* [(2006.01)]    *G05B 19/404* [(2006.01)]
    *G05B 19/19* [(2006.01)]

(21) Anmeldenummer: **08172388.4**

(22) Anmeldetag: **19.12.2008**

(84) Benannte Vertragsstaaten:
    **AT BE BG CH CY CZ DE DK EE ES FI FR GB GR
    HR HU IE IS IT LI LT LU LV MC MT NL NO PL PT
    RO SE SI SK TR**
    Benannte Erstreckungsstaaten:
    **AL BA MK RS**

(71) Anmelder: **Siemens Aktiengesellschaft
    80333 München (DE)**

(72) Erfinder:
    • **Forster, Gerhard
      90592 Schwarzenbruck (DE)**
    • **Thoma, Rainer
      96172 Mühlhausen (DE)**
    • **Hennefelder, Thomas
      91484 Markt Sugenheim (DE)**

(54) **Vorrichtung und Verfahren zur Minimierung eines dynamischen Schleppfehlers**

(57) Die Erfindung betrifft eine Vorrichtung und ein Verfahren zur Minimierung eines durch eine periodische Störgröße verursachten Schleppfehlers (18) eines Lageregelkreises (6). Um den Schleppfehler zu minimieren, werden folgende Verfahrensschritte vorgeschlagen:
- Bestimmung eines ersten Messwertes einer mit der Störgröße beaufschlagten Messgröße (1) zu einem ersten Zeitpunkt,
- Prognose eines zweiten Messwertes (26) der mit der Störgröße beaufschlagten Messgröße (1), den die Messgröße (1) zu einem gegenüber dem ersten Zeitpunkt in die Zukunft verschobenen zweiten Zeitpunkt annehmen wird, wobei der zweite Messwert (26) aus einem Kenndatensatz (3) der Messgröße (1) ermittelt wird, wobei der Kenndatensatz (3) Verlaufswerte der Messgröße (1) über mindestens eine Periode enthält,
- Aufschalten eines Vorsteuersignals (5) auf eine Sollgröße des Lageregelkreises (6), das proportional zum zweiten Messwert (26) ist.

FIG 1

EP 2 199 879 A1

**Beschreibung**

Die Erfindung betrifft eine Vorrichtung und ein Verfahren zur Minimierung eines durch eine periodische Störgröße verursachten Schleppfehlers eines Lageregelkreises.

Die Erfindung kommt beispielsweise bei der Regelung von Produktionsmaschinen oder numerisch gesteuerten Werkzeugmaschinen zum Einsatz.

Insbesondere bei Produktionsmaschinen wie Verpackungsmaschinen, Druckmaschinen, Pressen, Spritzgussmaschinen etc. treten häufig Störmomente oder Störkräfte während des Produktionsprozesses auf, die nicht schon bei der Projektierung der Maschine bekannt sind. Die Regelkreise derartiger Maschinen unterliegen daher schwer abschätzbaren Störungen, die eine stabile Lageregelung erschweren.

Bei Werkzeugmaschinen wird auf Basis eines sogenannten Teileprogramms ein Werkstück computergesteuert bearbeitet. Ein elektrischer Antrieb steuert hierbei entlang einer vorprogrammierten Werkzeugbahn ein zur Bearbeitung des Werkstücks vorgesehenes Werkzeug. Die durch das Teileprogramm vorgegebene Lage des Werkzeugs muss dabei in jedem Betriebszustand möglichst exakt eingehalten werden, um eine optimale Bearbeitungsqualität zu erzielen.

Zur Steuerung von Produktions- und Werkzeugmaschinen kommen in der Regel kaskadierte Regelkreise zum Einsatz. Ein äußerer Regelkreis wird hierbei von einem Lageregler gebildet, der zur Regelung einer vorgegebenen Lage bzw. Position vorgesehen ist. Dem Lageregler ist ein Drehzahlregler unterlagert, dem schließlich ein Stromregler unterlagert ist, der den Strom eines elektrischen Antriebs der Maschine regelt.

Bei jedem Bearbeitungsprozess können Störmomente oder Störkräfte entstehen, die zu einer Abweichung der tatsächlichen Lage von dem Sollwert der Lage führen. Es kommt dadurch zu einem sogenannten Schleppfehler, unter dem man die Differenz zwischen dem Lagesollwert und dem Lageistwert versteht. Dieser Schleppfehler umfasst in der Regel einen periodischen Anteil. Häufig kann ein solcher periodisch schwankender Schleppfehler durch die kaskadierte Antriebsregelung der Maschine nicht zufriedenstellend ausgeglichen werden.

Bisher wurde versucht, das Problem des schwankenden Schleppfehlers durch eine manuelle oder automatische Optimierung der Regelungsparameter des Strom-,-Drehzahl- und Lagereglers zu lösen. Da die Störmomente bzw. Störgrößen u.U. Resonanzen in der Mechanik des Antriebsstrangs hervorrufen können, werden häufig Strom- und/oder Drehzahlsollwertfilter eingesetzt, um diese Resonanzüberhöhungen zu unterbinden.

Aus der DE 10 2006 006 162 A1 ist eine Reglerstruktur zur Lageregelung eines Objektes bekannt, bei der aus dem Lagesollwert ein Vorsteuerstrom berechnet wird, der dem Stromsollwert der kaskadischen Reglerstruktur aufgeschaltet wird. Dieser Vorsteuerstrom wird außerdem einem Modell zur Torsionsvorsteuerung aufgeschaltet, dessen Ausgangssignal auf den Drehzahlsollwert aufgeschaltet ist. Das Modell zur Torsionsvorsteuerung besteht aus einem Differenzierer zum Bilden der ersten Ableitung des Vorsteuerstromes sowie einem zweiten Multiplizierer, in dem diese erste Ableitung des Vorsteuerstromes mit einem Faktor multipliziert wird.

Der Erfindung liegt die Aufgabe zugrunde, einen durch periodische Störgrößen verursachten Schleppfehler eines Lageregelkreises zu minimieren.

Diese Aufgabe wird durch ein Verfahren zur Minimierung eines durch eine periodische Störgröße verursachten Schleppfehlers eines Lageregelkreises eines elektrischen Antriebes gelöst mit folgenden Verfahrensschritten:

- Bestimmung eines ersten Messwertes einer mit der Störgröße beaufschlagten Messgröße zu einem ersten Zeitpunkt,
- Prognose eines zweiten Messwertes der mit der Störgröße beaufschlagten Messgröße, den die Messgröße zu einem gegenüber dem ersten Zeitpunkt in die Zukunft verschobenen zweiten Zeitpunkt annehmen wird, wobei der zweite Messwert aus einem Kenndatensatz der Messgröße ermittelt wird, wobei der Kenndatensatz Verlaufswerte der Messgröße über mindestens eine Periode enthält,
- Aufschalten eines Vorsteuersignals auf eine Sollgröße des Lageregelkreises, das proportional zum zweiten Messwert ist.

Ferner wird die Aufgabe durch eine Vorrichtung gelöst zur Minimierung eines durch eine periodische Störgröße verursachten Schleppfehlers eines Lageregelkreises eines elektrischen Antriebes, wobei die Vorrichtung umfasst:

- Mittel zur Bestimmung eines ersten Messwertes einer mit der Störgröße beaufschlagten Messgröße zu einem ersten Zeitpunkt,
- Mittel zur Prognose eines zweiten Messwertes der mit der Störgröße beaufschlagten Messgröße, den die Messgröße zu einem gegenüber dem ersten Zeitpunkt in die Zukunft verschobenen zweiten Zeitpunkt annehmen wird, wobei die Vorrichtung dazu eingerichtet ist, den zweiten Messwert aus einem Kenndatensatz der Messgröße zu ermitteln, wobei der Kenndatensatz Verlaufswerte der Messgröße über mindestens eine Periode enthält,
- Mittel zum Aufschalten eines Vorsteuersignals auf eine Sollgröße des Lageregelkreises, das proportional zum zweiten Messwert ist.

Ebenso wird die Aufgabe durch ein Computerprogrammprodukt enthaltend Programmcodemittel zur Ausführung des oben genannten Verfahrens gelöst, wenn besagtes Computerprogrammprodukt auf einem Datenverarbeitungssystem ausgeführt wird.

Vorteilhafte Ausgestaltungsformen der Erfindung ergeben sich aus den Unteransprüchen.

Die Erfindung macht sich das Prinzip der Vorsteuerung zu nutze, wodurch ein schnelleres Einregeln der gewünschten Lage und eine robustere Auslegung des kaskadierten Regelkreises erzielt werden kann. Dabei liegt der Erfindung die Erkenntnis zugrunde, dass ein geeignetes Vorsteuersignal auf Basis der Verlaufswerte der mit der Störgröße beaufschlagten Messgröße ermittelt werden kann, wenn diese Verlaufswerte für mindestens eine vollständige Periode aufgezeichnet wurden. Unter der Voraussetzung, dass die Störgröße ein periodisches Verhalten aufweist, gilt dies auch für die Messgröße, deren Verlaufswerte in dem Kenndatensatz abgespeichert sind. Dieser Kenndatensatz wird nun dazu verwendet, eine Prognose für den in der Zukunft liegenden Wert der Messgröße zum zweiten Zeitpunkt zu prognostizieren. Ziel ist es hierbei, das zukünftig zu erwartende Störverhalten oder ein hiervon abhängiges Signal auf den Lageregelkreis als Vorsteuersignal aufzuschalten.

Das Zeitintervall zwischen dem ersten Zeitpunkt und dem zweiten Zeitpunkt wird zu diesem Zweck so gewählt, dass ein optimales Störgrößenkompensationsverhalten erzielt wird. Das optimale Zeitintervall kann durch ein iteratives Vorgehen experimentell, analytisch oder durch Simulation ermittelt werden.

Als Messgröße kann jedes Signal dienen, das die Störgröße repräsentiert und damit eine Aussage über das um das Zeitintervall zeitlich verschobene Verhalten der Störgröße auf Basis des Kenndatensatzes ermöglicht.

Eine besonders vorteilhafte Anwendung findet das Verfahren bei einer Ausführungsform, bei der mit dem Lageregelkreis eine Lage einer Achse einer Produktionsmaschine geregelt wird. Unter einer Produktionsmaschine werden in diesem Zusammenhang beispielsweise Druckmaschinen, Spritzgußmaschinen, Pressen und Verpackungsmaschinen verstanden. Da gerade bei derartigen Maschinen im laufenden Produktionsprozess häufig Störungen auftreten, hilft das hier vorgeschlagene Verfahren in besonderem Maße, die Stabilität des Regelkreises zu verbessern.

In weiterer vorteilhafter Ausgestaltung der Erfindung beschreibt der Kenndatensatz eine erste Abhängigkeit der Messgröße von einem Lageistwert einer zu regelnden Lage über die mindestens eine Periode, wobei aus dem zeitlichen Abstand zwischen dem ersten und dem zweiten Zeitpunkt eine Lageänderung prognostiziert wird, die der Lageistwert zum zweiten Zeitpunkt durchläuft. Der Kenndatensatz enthält also für mindestens eine Periode die Messgröße als Funktion des Lageistwertes. Aus dem zeitlichen Abstand zwischen dem ersten und dem zweiten Zeitpunkt kann durch Multiplikation mit der Drehzahl des elektrischen Antriebes eine Lageänderung des Lageistwertes prognostiziert werden. Beinhaltet der Kenndatensatz ferner eine Abhängigkeit zwischen dem Istwert der Lage und dem Wert der mit der Störgröße beaufschlagten Messgröße, so kann der zweite Messwert mit Hilfe dieser Abhängigkeit prognostiziert werden.

Des Weiteren kennzeichnet sich eine vorteilhafte Ausgestaltung der Erfindung dadurch, dass der Kenndatensatz eine zweite Abhängigkeit der Messgröße von einem Drehzahlistwert des Antriebs über die mindestens eine Periode beschreibt. Beispielsweise kann der Kenndatensatz in Form eines dreidimensionalen Kennlinienfeldes aufgebaut sein, bei dem die mit der Störgröße beaufschlagte Messgröße über dem Lageistwert und dem Drehzahlistwert aufgetragen ist. Hierbei kann der zweite Messwert für jede Lage in Abhängigkeit der Drehzahl des elektrischen Antriebes bestimmt und damit für die Zukunft prognostiziert werden.

Alternativ ist eine vorteilhafte Ausführungsform der Erfindung denkbar, bei der der Kenndatensatz einen Verstärkungsfaktor als Funktion eines Drehzahlistwertes des elektrischen Antriebes beschreibt. Hierbei kann beispielsweise der Kenndatensatz eine Kennlinie enthalten, die die Messgröße über dem Lageistwert aufzeichnet und eine weitere Kennlinie, die den Verstärkungsfaktor in Abhängigkeit des Drehzahlistwertes angibt. Unter Zuhilfenahme der Kennlinie, die die Abhängigkeit der Messgröße vom Lageistwert beschreibt, wird hierbei zunächst der zweite Messwert unter Berücksichtigung der aktuellen Drehzahl bestimmt. Dieser zweite Messwert wird anschließend mit dem drehzahlabhängigen Verstärkungsfaktor multipliziert, um das Vorsteuersignal zu bestimmen.

Anstelle des Drehzahlistwertes kann auch der Drehmomentistwert als Bezugsgröße innerhalb des Kenndatensatzes verwendet werden. So ist eine Ausgestaltung der Erfindung vorteilhaft, bei der der Kenndatensatz eine zweite Abhängigkeit der Messgröße von einem Gleichanteil eines Drehmomentistwertes des Antriebes über die mindestens eine Periode beschreibt.

Der zeitliche Abstand, der zwischen dem ersten und dem zweiten Zeitpunkt existiert, hat einen entscheidenden Einfluss auf den Wert des Vorsteuersignals. Daher ist eine Ausgestaltung der Erfindung vorteilhaft, bei der der zeitliche Abstand zwischen dem ersten und dem zweiten Zeitpunkt mittels eines Optimierungsverfahrens zur Laufzeit des elektrischen Antriebs variiert wird. So kann auf iterative Weise der zeitliche Abstand ermittelt werden, bei der der Lageregelkreis die beste Stabilität aufweist.

In weiterer vorteilhafter Ausgestaltung der Erfindung wird zur Ermittlung des Kenndatensatzes eine erste Messung der mit der Störgröße beaufschlagten Messgröße in einer Initialisierungsphase durchgeführt. Hierbei werden diskrete Stützwerte in einem Speicher abgespeichert. Somit wird zunächst vor der Inbetriebnahme des elektrischen Antriebs die Regelabweichung vermessen, um Informationen über das periodische Verhalten der Störgröße zu sammeln. Auf Basis dieser Informationen wird im Anschluss ein geeignetes Vorsteuersignal bestimmt, welches im laufenden Betrieb auf den Lageregelkreis aufgeschaltet wird.

Die Stabilität kann in vorteilhafter Ausgestaltung weiter verbessert werden, wenn zur Aktualisierung des Kenndatensatzes eine zweite Messung der mit der Störgröße beaufschlagten Messgröße durchgeführt wird und aktualisierte diskrete Stützwerte in dem Speicher abgespeichert werden. Auf diese Weise wird der Regelkreis zur Laufzeit adaptiert, um stets ein optimales Regelverhalten zu gewährleisten.

Das ideale Zeitintervall zwischen dem ersten und zweiten Zeitpunkt ist nicht zwangsläufig mit den Abtastintervallen konform, die bei der Ermittlung der Stützwerte verwendet werden. Entsprechend ist eine Ausführungsform der Erfindung vorteilhaft, bei der nicht gespeicherte Zwischenwerte des ersten und/oder zweiten Messwertes aus dem Kenndatensatz durch Interpolation zwischen den Stützwerten ermittelt werden.

Den geringsten Aufwand stellt eine Ausführungsform der Erfindung dar, bei der der Schleppfehler als Messsignal verwendet wird. Mit teilweise etwas höherem Aufwand können jedoch auch der Drehmomentistwert, der Drehmomentsollwert, Stromistwert, Stromsollwert oder der Drehzahlfehler, d.h. die Abweichung des Drehzahlsollwertes von dem Drehzahlistwert, als Messsignal verwendet werden.

Um die gewünschte Erhöhung der Stabilität der Lageregelung zu erzielen, ist eine Ausführungsform der Erfindung vorteilhaft, bei der das Vorsteuersignal auf einen Drehmomentsollwert des elektrischen Antriebes aufaddiert wird. Alternativ sind aber auch Ausführungen der Erfindung denkbar, bei denen das Vorsteuersignal auf einen Stromsollwert eines Stromrichters oder auf einem Drehzahlsollwert des elektrischen Antriebes oder auf einen Lagesollwert für eine zu regelnde Lage aufaddiert wird.

Im Folgenden wird die Erfindung anhand der in den Figuren dargestellten Ausführungsbeispiele näher beschrieben und erläutert.

Es zeigen:

FIG 1: einen konventionellen Lageregelkreis, der um eine erste Störgrößenaufschaltung gemäß einer Ausführungsform der Erfindung erweitert wurde,

FIG 2: den konventionellen Lageregelkreis, der um eine zweite Störgrößenaufschaltung gemäß einer weiteren Ausführungsform der Erfindung erweitert wurde,

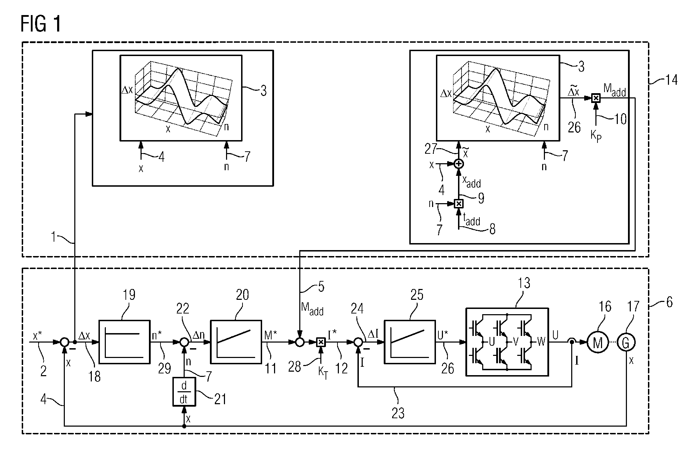

FIG 1 zeigt einen konventionellen Lageregelkreis 6, der um eine erste Störgrößenaufschaltung 14 gemäß einer Ausführungsform der Erfindung erweitert wurde. Sollgrößen sind in den Figuren grundsätzlich mit einem hochgestellten Stern bezeichnet. Prognostizierte Größen weisen eine Tilde auf.

Mit dem dargestellten Lageregelkreis 6 wird letztendlich in Abhängigkeit eines Lagesollwerts 2 eine Klemmenspannung für einen Elektromotor 16 erzeugt, der eine Achse eines Antriebes einer Produktionsmaschine ansteuert. Der Elektromotor 16 kann sowohl als rotatorischer Elektromotor als auch als Linearmotor ausgeführt sein. Der Elektromotor 16 ist über eine hier nicht dargestellte Anordnung mit einer nichtlinearen Mechanik, z. B. einem Kniehebel einer Schubkurbel oder einer anderen mechanischen Kurvenscheibe gekoppelt. Ein Lageistwert 4 der nichtlinearen Mechanik wird mit Hilfe eines Gebers 17 erfasst und zurückgekoppelt. D.h., zu jedem Abtastzeitpunkt wird die Differenz zwischen einem Lagesollwert 2 und dem Lageistwert 4 gebildet, um einen Schleppfehler 18 zu berechnen.

Ein Lageregler 19 erzeugt aus dem Schleppfehler 18 einen Drehzahlsollwert 29. Ein der Lageregelung untergeordneter Drehzahlregler 20 berechnet schließlich aus der Abweichung des Drehzahlsollwertes 29 und einem mittels eines Differenziators 21 aus dem Lageistwert 4 gewonnenen Drehzahlistwert 7 eine Regeldifferenz der Drehzahl 22. Aus dieser wird mit Hilfe des Drehzahlreglers 20 schließlich ein Drehmomentsollwert 11 bestimmt. Durch Multiplikation dieses Drehmomentsollwertes 11 mit einer Maschinenkonstante 28 des Elektromotors 16 kann schließlich ein Stromsollwert 12 berechnet werden, der von einem Stromrichter 13 in den Elektromotor 16 einzuprägen ist. Um dies zu gewährleisten, ist dem Drehzahlregelkreis ein Stromregelkreis untergeordnet. Am Ausgang des Stromrichters 13 wird ein Stromistwert 23 gemessen und vom Sollstromwert 12 abgezogen. Die Regeldifferenz des Stromes 24 wird schließlich über einen Stromregler 25 zu einem Spannungssollwert 26 transformiert, der von dem Leistungsteil bzw. dem Stromrichter 13 als Klemmenspannung für den Elektromotor 16 erzeugt werden soll.

Der dargestellte Lageregelkreis 6, dessen Struktur aus dem Stand der Technik bekannt ist, kann durch Störgrößen, die beispielsweise von einer nichtlinearen Mechanik erzeugt werden und auf den Antriebsstrang wirken, gestört werden. Es kann hierdurch zu starken Schwingungen des Schleppfehlers 18 bis hin zu Instabilität kommen. Um die Genauigkeit des Lageregelkreises 6 zu verbessern, wird daher die Störgrößenaufschaltung 14 vorgesehen. Hierbei wird zunächst der Schleppfehler 18 gemessen. Der gemessene Schleppfehler 18 wird nun als Messgröße 1 verwendet, um ein geeignetes Vorsteuersignal 5 abzuleiten.

Als Basis für das Verfahren, muss zunächst ein Kenndatensatz 3 in Form eines dreidimensionalen Kennliniensatzes erzeugt werden. Dies kann beispielsweise zunächst in einer Initialisierungsphase durchgeführt werden, bei dem das Regelverhalten des Antriebes vermessen wird. Es wird über mindestens eine Periode der Verlauf des Schleppfehlers 18 in Abhängigkeit des Lageistwertes 4 und des Drehzahlistwertes 7 aufgezeichnet. Ein derartiges Kennlinienfeld wird in einem Speicherbaustein einer Steuerung des elektrischen Antriebes hinterlegt. Zur Laufzeit wird nun mit Hilfe dieses Kennlinienfeldes bei jedem Zeitschritt ein geeignetes Vorsteuersignal 5 in Form eines Zusatzdrehmomentes M_add berechnet.

Zunächst wird ein geeignetes Zeitintervall (in der Figur auch mit t_add bezeichnet) festgelegt, um das in die Zukunft geschaut werden soll. Dieser zeitliche Abstand 8 zwischen einem ersten Zeitpunkt, zu dem der Schleppfehler 18 gemessen wird, und einem zweiten Zeitpunkt, für den der Schleppfehler 18 prognostiziert werden soll, wird mit Hilfe eines geeigneten Optimierungsverfahrens während der Initialisierungsphase und im laufenden Betrieb stetig optimiert. Durch Multiplikation des zeitlichen Abstandes 8 mit dem Drehzahlistwert 7 erhält man schließlich eine Lageänderung 9 (in der Figur als x_add bezeichnet), die die zu regelnde Lage innerhalb des zeitlichen Abstandes zwischen dem ersten und dem zweiten Zeitpunkt durchläuft.
D.h.:

$$x_{add} = t_{add} \cdot n$$

Diese Lageänderung 9 wird auf den Lageistwert 4 aufaddiert, so dass man einen prognostizierten Lageistwert 27 (in der Figur auch $\widetilde{x}$) für den zweiten Zeitpunkt erhält.
D.h.:

$$\widetilde{x} = x + x_{add}$$

Mit diesem prognostizierten Lageistwert 27 und dem Drehzahlistwert 7 kann nun der zweite Messwert 26, also der prognostizierte Schleppfehler (in der Figur auch als $\Delta\widetilde{x}$ bezeichnet) für den zweiten Zeitpunkt, aus dem dreidimensionalen Kennlinienfeld ausgelesen werden. Der zweite Messwert 26 wird schließlich noch mit einem Verstärkungsfaktor 10 (in der Figur auch mit K_p bezeichnet) multipliziert, um das gewünschte Vorsteuersignal 5 in Form eines Zusatzdrehmomentes zu erhalten. Dieses wird in geeigneter Weise auf den Lageregelkreis 6 aufgeschaltet.
D.h.:

$$M_{add} = K_p \cdot \Delta\widetilde{x} = K_p \cdot f(\widetilde{x}, n)$$

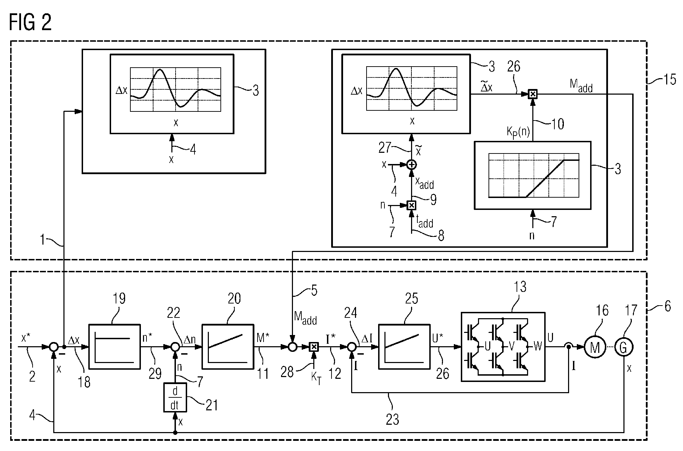

FIG 2 zeigt den konventionellen Lageregelkreis 6, der um eine zweite Störgrößenaufschaltung 15 gemäß einer weiteren Ausführungsform der Erfindung erweitert wurde. Im Unterschied zur ersten Störgrößenaufschaltung 14 gemäß FIG 1 ist hier in einem Kenndatensatz 3 kein dreidimensionales Kennlinienfeld sondern eine zweidimensionale Kennlinie abgespeichert, die den Schleppfehler 18 in Abhängigkeit des Lageistwertes 4 beschreibt. Die Ermittlung dieser Kennlinie geschieht in analoger Weise zu der Ermittlung des unter FIG 1 beschriebenen dreidimensionalen Kennlinienfeldes.

Zur Laufzeit wird nun aus dem Produkt des zeitlichen Abstandes 8 zwischen dem ersten Zeitpunkt und dem zweiten Zeitpunkt mit dem Drehzahlistwert 7 eine Lageänderung 9 und daraus ein prognostizierter Lageistwert 27 für den zweiten Zeitpunkt bestimmt. Aus diesem prognostizierten Lageistwert 27 erhält man mit Hilfe der Kennlinie den zweiten Messwert 26 als prognostizierten Schleppfehler zum zweiten in der Zukunft liegenden Zeitpunkt. Ferner enthält der Kenndatensatz 3 eine Abhängigkeit eines Verstärkungsfaktors 10 von dem Drehzahlistwert 7. Dieser drehzahlabhängige Verstärkungsfaktor 10 wird mit dem zweiten Messwert 26 multipliziert, wodurch man das gewünschte Vorsteuersignal 5 erhält. Dieses wird schließlich als Zusatzdrehmoment auf den Lageregelkreis 6 aufgeschaltet, um die Stabilität des Regelkreises zu verbessern.
D.h., hier gilt:

$$M_{add} = K_p(n) \cdot f(\widetilde{x})$$

**Patentansprüche**

1. Verfahren zur Minimierung eines durch eine periodische Störgröße verursachten Schleppfehlers (18) eines Lageregelkreises (6) eines elektrischen Antriebes mit folgenden Verfahrensschritten:

   - Bestimmung eines ersten Messwertes einer mit der Störgröße beaufschlagten Messgröße (1) zu einem ersten Zeitpunkt,
   - Prognose eines zweiten Messwertes (26) der mit der Störgröße beaufschlagten Messgröße (1), den die Messgröße (1) zu einem gegenüber dem ersten Zeitpunkt in die Zukunft verschobenen zweiten Zeitpunkt annehmen wird, wobei der zweite Messwert (26) aus einem Kenndatensatz (3) der Messgröße (1) ermittelt wird, wobei der Kenndatensatz (3) Verlaufswerte der Messgröße (1) über mindestens eine Periode enthält,
   - Aufschalten eines Vorsteuersignals (5) auf eine Sollgröße des Lageregelkreises (6), das proportional zum zweiten Messwert (26) ist.

2. Verfahren nach Anspruch 1,
   wobei mit dem Lageregelkreis (6) eine Lage einer Achse einer Produktionsmaschine geregelt wird.

3. Verfahren nach Anspruch 1 oder 2,
   wobei der Kenndatensatz (3) eine erste Abhängigkeit der Messgröße (1) von einem Lageistwert (4) einer zu regelnden Lage über die mindestens eine Periode beschreibt und aus dem zeitlichen Abstand (8) zwischen dem ersten und zweiten Zeitpunkt ein Lageänderung (9) prognostiziert wird, die der Lageistwert (4) zum zweiten Zeitpunkt durchläuft.

4. Verfahren nach einem der vorhergehenden Ansprüche,
wobei der Kenndatensatz (3) eine zweite Abhängigkeit der Messgröße (1) von einem Drehzahlistwert (7) des Antriebs über die mindestens eine Periode beschreibt.

5. Verfahren nach einem der Ansprüche 1 bis 3,
wobei der Kenndatensatz (3) einen Verstärkungsfaktor (10) als Funktion eines Drehzahlistwertes (7) des elektrischen Antriebes beschreibt.

6. Verfahren nach einem der Ansprüche 1 bis 3,
wobei der Kenndatensatz (3) eine zweite Abhängigkeit der Messgröße (1) von einem Gleichanteil eines Drehmomentistwertes des Antriebs über die mindestens eine Periode beschreibt.

7. Verfahren nach einem der vorhergehenden Ansprüche,
wobei der zeitliche Abstand (8) zwischen dem ersten und zweiten Zeitpunkt mittels eines Optimierungsverfahrens zur Laufzeit des elektrischen Antriebes variiert wird.

8. Verfahren nach einem der vorhergehenden Ansprüche,
wobei zur Ermittlung des Kenndatensatzes (3) eine erste Messung der mit der Störgröße beaufschlagten Messgröße (1) in einer Initialisierungsphase durchgeführt wird und diskrete Stützwerte in einem Speicher abgespeichert werden.

9. Verfahren nach Anspruch 8,
wobei zur Aktualisierung des Kenndatensatzes (3) eine zweite Messung der mit der Störgröße beaufschlagten Messgröße (1) durchgeführt wird und aktualisierte diskrete Stützwerte in dem Speicher abgespeichert werden.

10. Verfahren nach einem der Ansprüche 8 oder 9,
wobei nicht gespeicherte Zwischenwerte des ersten und/oder zweiten Messwertes (26) aus dem Kenndatensatz (3) durch Interpolation zwischen den Stützwerten ermittelt werden.

11. Verfahren nach einem der vorhergehenden Ansprüche,
wobei der Kenndatensatz (3) zur dynamischen Anpassung von Parametern des Lageregelkreises (6) verwendet wird.

12. Verfahren nach einem der vorhergehenden Ansprüche,

che,
wobei der Schleppfehler (18) als das Messsignal (1) verwendet wird.

13. Verfahren nach einem der vorhergehenden Ansprüche,
wobei das Vorsteuersignal (5) auf einen Drehmomentsollwert (11) des elektrischen Antriebes aufaddiert wird.

14. Verfahren nach einem der Ansprüche 1 bis 12,
wobei das Vorsteuersignal (5) auf einen Stromsollwert (12) eines Stromrichters (13) oder auf einen Drehzahlsollwert (29) des elektrischen Antriebes oder auf einen Lagesollwert (2) für eine zu regelnde Lage aufaddiert wird.

15. Vorrichtung zur Minimierung eines durch eine periodische Störgröße verursachten Schleppfehlers (18) eines Lageregelkreises (6) eines elektrischen Antriebes, wobei die Vorrichtung umfasst:

- Mittel zur Bestimmung eines ersten Messwertes einer mit der Störgröße beaufschlagten Messgröße (1) zu einem ersten Zeitpunkt,
- Mittel zur Prognose eines zweiten Messwertes (26) der mit der Störgröße beaufschlagten Messgröße (1), den die Messgröße (1) zu einem gegenüber dem ersten Zeitpunkt in die Zukunft verschobenen zweiten Zeitpunkt annehmen wird, wobei die Vorrichtung dazu eingerichtet ist, den zweiten Messwert (26) aus einem Kenndatensatz (3) der Messgröße (1) zu ermitteln, wobei der Kenndatensatz (3) Verlaufswerte der Messgröße (1) über mindestens eine Periode enthält,
- Mittel zum Aufschalten eines Vorsteuersignals (5) auf eine Sollgröße des Lageregelkreises (6), das proportional zum zweiten Messwert (26) ist.

16. Computerprogrammprodukt enthaltend Programmcodemittel zur Ausführung eines Verfahrens nach einem der Ansprüche 1 bis 11, wenn besagtes Computerprogrammprodukt auf einem Datenverarbeitungssystem ausgeführt wird.

FIG 1

FIG 2

EP 2 199 879 A1

**EUROPÄISCHER RECHERCHENBERICHT**

Europäisches Patentamt
European Patent Office
Office européen des brevets

Nummer der Anmeldung

EP 08 17 2388

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 103 09 670 A1 (ROLAND MAN DRUCKMASCH [DE]) 16. September 2004 (2004-09-16) * Zusammenfassung * * Absätze [0007], [0008], [0018], [0021], [0035], [47105] * * Anspruch 1 * * Abbildungen 16,17 * ----- | 1-16 | INV. G05B13/04 G05B19/404 G05B19/19 |
| X | MARTIN RAU: "Nichtlineare modellbasierte prädiktive Regelung auf Basis lernfähiger Zustandsraummodelle" DISSERTATION FAKULTÄT ELEKTRO- UND INFORMATIONSTECHNIK, 30. Mai 2003 (2003-05-30), XP002519999 Lehrstuhl für el. Antriebstechnik TU München * Seite 1 - Seite 4 * * Seite 64 - Seite 92 * * Seite 93 - Seite 99 * ----- | 1-16 | |
| A | RUNZI CAO ET AL: "Repetitive Model Predictive Control of a Precision Linear Motor Drive" INDUSTRIAL ELECTRONICS SOCIETY, 2007. IECON 2007. 33RD ANNUAL CONFERENCE OF THE IEEE, IEEE, PISCATAWAY, NJ, USA, 5. November 2007 (2007-11-05), Seiten 1132-1137, XP031234826 ISBN: 978-1-4244-0783-5 * Seite 1132 - Seite 1134 * ----- | 1-16 | RECHERCHIERTE SACHGEBIETE (IPC) G05B |
| A | DE 195 32 146 A1 (MITSUBISHI ELECTRIC CORP [JP]) 14. März 1996 (1996-03-14) * Spalte 1 - Spalte 2 * * Abbildung 1 * ----- | 1-16 | |

Der vorliegende Recherchenbericht wurde für alle Patentansprüche erstellt

| Recherchenort | Abschlußdatum der Recherche | Prüfer |
|---|---|---|
| München | 25. März 2009 | Rakoczy, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.**

EP 08 17 2388

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-03-2009

| Im Recherchenbericht angeführtes Patentdokument | Datum der Veröffentlichung | Mitglied(er) der Patentfamilie | Datum der Veröffentlichung |
|---|---|---|---|
| DE 10309670 A1 | 16-09-2004 | KEINE | |
| DE 19532146 A1 | 14-03-1996 | JP 3407490 B2 | 19-05-2003 |
| | | JP 8123522 A | 17-05-1996 |
| | | US 5708586 A | 13-01-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006006162 A1